Europäisches Patentamt

European Patent Office

Office européen des brevets

(19)

(11) Veröffentlichungsnummer: **0 304 716 B1**

(12) # EUROPÄISCHE PATENTSCHRIFT

(45) Veröffentlichungstag der Patentschrift: 06.11.91

(21) Anmeldenummer: 88112897.9

(22) Anmeldetag: 08.08.88

(51) Int. Cl.⁵: **F04C 2/107**, F04C 15/00, F16D 3/20

(54) **Bolzengelenk für Exzenterschneckenpumpen.**

(30) Priorität: 28.08.87 DE 3728821

(43) Veröffentlichungstag der Anmeldung:
01.03.89 Patentblatt 89/09

(45) Bekanntmachung des Hinweises auf die
Patenterteilung:
06.11.91 Patentblatt 91/45

(84) Benannte Vertragsstaaten:
BE DE ES FR GB IT NL

(56) Entgegenhaltungen:
DE-A- 2 738 945
DE-A- 3 000 476

(73) Patentinhaber: Netzsch-Mohnopumpen GmbH
Liebigstrasse 28
W-8264 Waldkraiburg(DE)

(72) Erfinder: Hantschk, Günther
Tannenweg 35
W-8264 Waldkraiburg(DE)

(74) Vertreter: Goetz, Rupert, Dipl.-Ing. et al
Wuesthoff & Wuesthoff Patent- und Rechtsanwälte Schweigerstrasse 2
W-8000 München 90(DE)

**Beschreibung**

Die Erfindung betrifft ein Bolzengelenk für Exzenterschneckenpumpen mit

- einem äußeren Gelenkkopf, der einen mindestens in einer axialen Richtung offenen Hohlraum sowie eine diametrale Bohrung aufweist,
- einem inneren Gelenkkopf, der in dem Hohlraum angeordnet ist und ebenfalls eine diametrale Bohrung aufweist,
- einem Gelenkbolzen, der sich durch die beiden diametralen Bohrungen erstreckt, und
- einer Bolzensicherung, die den Gelenkbolzen am äußeren Gelenkkopf festhält.

Exzenterschneckenpumpen werden wegen der für sie charakteristischen schonenden Förderung vielfach in der Lebensmittelindustrie eingesetzt. Dabei ist jedoch bei bekannten Exzenterschneckenpumpen von Nachteil, daß sie sich wegen ihres im Vergleich zu Kreisel- und Kreiskolbenpumpen komplizierteren inneren Aufbaus weniger gut reinigen lassen. Dies gilt vor allem für die aus hygienischen Gründen in kurzen Zeitabständen erforderliche Reinigung nach dem CIP(cleaning in place)-Verfahren, bei dem Pumpen und daran angeschlossene Leitungen, ohne zerlegt zu werden, mit einem Reinigungsmittel bei hoher Strömungsgeschwindigkeit gespült werden. Schwierig zu reinigen sind vor allem die Bereiche von Dichtungen zwischen Bauteilen, die zerlegbar miteinander verbunden und/oder im Betrieb gegeneinander beweglich sind. Deshalb werden die bei Exzenterschneckenpumpen üblicherweise an beiden Enden einer Kuppelstange zwischen Antriebswelle und Rotor vorgesehenen Gelenke bei solchen Pumpen, die für die Lebensmittelindustrie vorgesehen sind, vorwiegend als offene Bolzengelenke ohne jede Abdichtung ausgeführt.

So ist aus der DE-A 1 528 935 eine Exzenterschneckenpumpe bekannt, bei der an je einem Ende einer Kuppelstange zwischen Antriebswelle und Rotor zwei Bolzengelenke der eingangs beschriebenen Gattung angeordnet sind. Bei jedem dieser Gelenke hat der Gelenkbolzen an seinen beiden Enden je ein Gewinde, auf das eine Mutter aufgeschraubt ist. Die Vorschriften für die Gestaltung von Maschinen, die in der Lebensmittelindustrie eingesetzt werden, beispielsweise der in U.S.A. geltende "3A-Standard" lassen jedoch Gewinde im Fördermedium grundsätzlich nicht zu; Ausnahmen gelten nur für Gewinde mit bestimmten, verhältnismäßig großen Abrundungsradien, die bei einem Gelenkbolzen nicht eingehalten werden können.

Es sind ferner Bolzengelenke für Exzenterschneckenpumpen bekannt, beispielsweise aus der DE-B 1 278 842, bei denen der Gelenkbolzen durch eine auf den äußeren Gelenkkopf aufgeschobene Hülse festgehalten ist. Die Hülse liegt mit einem Ende an einer Schulter des äußeren Gelenkkopfes an und ist an ihrem anderen Ende durch einen federnd eingerasteten Sicherungsring (Seegerring) gegen axiale Verschiebung gesichert. Dabei sind jedoch enge Spalte zwischen Gelenkkopf, Hülse und Sicherungsring unvermeidlich, so daß diese Konstruktion als solche für eine Reinigung nach dem CIP-Verfahren nicht geeignet ist. Um das Fördergut daran zu hindern, in die Bolzengelenke einzudringen, sind diese von je einer Schutzmuffe aus elastischem Material umschlossen, die einerseits an der Kuppelstange zwischen Antriebswelle und Rotor und andererseits an der Antriebswelle bzw. am Rotor dicht befestigt ist. Diese Befestigungen bilden jedoch, selbst wenn sie dicht bleiben, schwer zu reinigende Bereiche, die eine Reinigung nach dem CIP-Verfahren ausschließen. Für jede einigermaßen gründliche Reinigung muß deshalb die Schutzmuffe entfernt und getrennt vom zugehörigen Bolzengelenk gereinigt werden, was äußerst zeitraubend ist.

Entsprechendes gilt auch für eine weitere, aus der DE-A- 2738945 bekannte Exzenterschneckenpumpe mit einem Bolzengelenk, das den Rotor der Pumpe mit einer pendelnd gelagerten Kuppelstange verbindet. Das Bolzengelenk hat wiederum eine auf den äußeren Gelenkkopf aufgeschobene Hülse, durch die der Gelenkbolzen am Herausfallen gehindert ist. In der Hülse steckt, dem äußeren Gelenkkopf axial gegenüber, ein zylindrischer Abschnitt einer ringförmigen Gleitscheibe, durch die sich die Kuppelstange hindurcherstreckt. Die Gleitscheibe wird von einer Feder belastet, die sich innerhalb der Hülse am äußeren Gelenkkopf abstützt. Durch die Kraft dieser Feder wird die Gleitscheibe gegen eine ortsfeste Ringfläche des Pumpengehäuses gedrückt, wodurch dessen Innenraum gegen die Umgebung abgedichtet ist. Zum Reinigen nach dem CIP-Verfahren ist auch diese Anordnung ungeeignet.

Ein von einer Feder belasteter Gleitring ist auch bei einer weiteren, aus der DE-A-3000476 bekannten Exzenterschneckenpumpe zur Abdichtung des Innenraums einer rohrförmigen Zwischenwelle mit einer großenteils in diesem Innenraum aufgenommenen Kuppelstange bekannt. Die Feder stützt sich an einem Querstift ab, der das aus der Zwischenwelle herausragende Ende der Kuppelstange mit einem in ihr steckenden Zapfen eines radial inneren Gelenkkopfes eines Bolzengelenks verbindet. Das Bolzengelenk hat einen eigenen Gelenkbolzen, der in einem Abstand parallel zum Querstift angeordnet ist. Auch diese bekannte Anordnung läßt sich schwer reinigen.

Der Erfindung liegt deshalb die Aufgabe zugrunde, ein Bolzengelenk der eingangs beschriebenen Gattung derart zu gestalten, daß es sich mit geringem Zeitaufwand gründlich reinigen läßt und vor allem für eine Reinigung nach dem CIP-Verfahren gut geeignet ist.

Die Aufgabe ist erfindungsgemäß dadurch gelöst, daß

- der Gelenkbolzen zwei aus dem äußeren Gelenkkopf radial herausragende Enden mit je einer quer zur Längsrichtung des Gelenkbolzens verlaufenden Einkerbung aufweist und
- die Bolzensicherung von einer Schraubenfeder gebildet ist, die sich mit einem Ende in den beiden Einkerbungen des Gelenkbolzens und mit ihrem anderen Ende an einer Schulter abstützt, welche in bezug zum äußeren Gelenkkopf axial unverschiebbar ist.

Die beiden Einkerbungen an dem Gelenkbolzen lassen sich derart abrunden, daß sie leicht zu reinigen sind. Auch die Schraubenfeder ist wegen des für solche Federn typischen Zwischenraums zwischen den einzelnen Federwindungen leicht zu reinigen, vor allem mit einer Reinigungsflüssigkeit zu durchspülen. Außerdem läßt sich das Bolzengelenk durch Wegdrücken der Schraubenfeder vom Gelenkbolzen und anschließendes Herausziehen des Gelenkbolzens bei Bedarf leicht zerlegen.

Bei der Exzenterschneckenpumpe nach der eingangs genannten DE-A 1 528 835 ist rings um die Antriebswelle eine Gleitringdichtung mit einem gehäusefesten Teil und einem mit deren Antriebswelle umlaufenden topfförmigen Dichtungsteil angeordnet. Zwischen diesem und einer vom Gelenkbolzen abgewandten Schulter am äußeren Gelenkkopf ist eine Schraubenfeder eingespannt, die das topfförmige Dichtungsteil gegen das gehäusefeste Dichtungsteil drückt. Zur Sicherung des Gelenkbolzens trägt die Schraubendruckfeder nicht bei.

Im Gegensatz dazu ist gemäß einer Weiterbildung der Erfindung die Schulter, an der die am Gelenkbolzen abgestützte Schraubenfeder ihre Gegenabstützung findet, an einer Gleitringdichtung ausgebildet, die den äußeren Gelenkkopf gegen ein Gehäuseteil abdichtet.

Ein Ausführungsbeispiel mit weiteren Einzelheiten der Erfindung wird im folgenden anhand schematischer Zeichnungen erläutert. Es zeigen, jeweils z.T. in einem axialen Schnitt,

Fig. 1    ein erstes Bolzengelenk samt benachbarten Teilen einer Exzenterschneckenpumpe, und

Fig. 2    das zweite, zu derselben Exzenterschneckenpumpe gehörige Bolzengelenk.

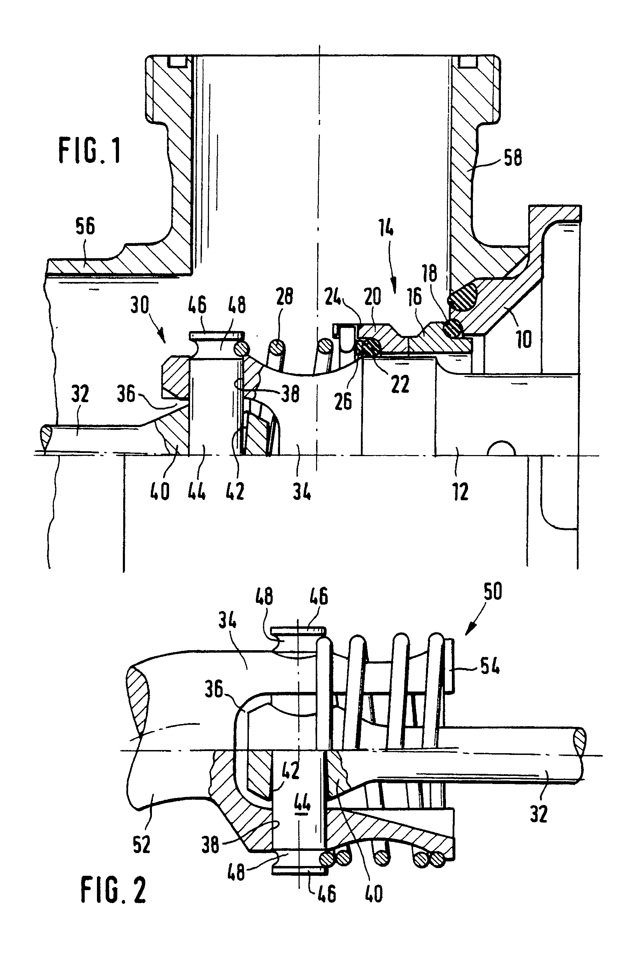

In Fig. 1 ist ein Lagergehäuse 10 angedeutet, in dem eine Antriebswelle 12 in üblicher, nicht dargestellter Weise gelagert ist. Die Antriebswelle 12 ist gegen das Lagergehäuse 10 durch eine Gleitringdichtung 14 abgedichtet, die einen ortsfesten Gleitring 16, einen zwischen diesem und dem Lagergehäuse 10 angeordneten O-Ring 18 sowie einen zusammen mit der Antriebswelle drehbaren Gleitring 20 und einen zwischen diesem und der Antriebswelle 12 angeordneten O-Ring 22 aufweist.

Am Gleitring 20 ist eine Schulter 24 ausgebildet und radial innerhalb davon ein Zwischenring 26 angeordnet. An der Schulter 24 stützt sich eine Endwindung einer Schraubenfeder 28 ab, die zugleich den Zwischenring 26 am O-Ring 22 anliegend hält. Die Schraubenfeder 28 ist als Druckfeder ausgebildet und um ein Bolzengelenk 30 herum gewendelt. Das Bolzengelenk 30 verbindet die Antriebswelle 12 mit einer Kuppelstange 32, die bei Drehung der Antriebswelle 12 Bewegungen auf einer Kegelmantelfläche auszuführen hat. Zum Bolzengelenk 30 gehört ein gabelförmiger äußerer Gelenkkopf 34 mit einem Hohlraum 36, der in einer von der Antriebswelle 12 abgewandten Richtung sowie in zwei entgegengesetzten radialen Richtungen offen ist und eine diametrale Bohrung 38 aufweist. Innerhalb des Hohlraums 36 ist ein massiver innerer Gelenkkopf 40 angeordnet, der ebenfalls eine diametrale Bohrung 42 aufweist.

Durch die Bohrungen 38 und 42 erstreckt sich ein zylindrischer Gelenkbolzen 44, dessen Enden 46 beide radial aus dem äußeren Gelenkkopf 34 herausragen und je eine Einkerbung 48 in Gestalt einer Ringnut von nahezu halbkreisförmigem Querschnitt aufweisen. In den beiden Einkerbungen 48 stützt sich die Schraubenfeder 28 mit ihrer von der Gleitringdichtung 14 entfernten Endwindung ab. Dabei ist die Schraubenfeder 28 derart vorgespannt, daß sie einerseits den Gleitring 20 in dichtender stirnseitiger Anlage am Gleitring 16 hält und andererseits jegliche Verschiebung des Gelenkbolzens 44 in dessen Längsrichtung verhindert.

Die Kuppelstange 32 verbindet das in Fig. 1 dargestellte Bolzengelenk 30 mit einem in Fig. 2 dargestellten zweiten Bolzengelenk 50, das im wesentlichen gleich ausgebildet ist wie das erste Bolzengelenk 30; einander entsprechende Bauteile beider Bolzengelenke sind mit gleichen Bezugszeichen versehen.

Der äußere Gelenkkopf 34 des zweiten Bolzengelenks 50 ist einstückig mit einem Rotor 52 ausgebildet und hat an seinem von diesem entfernten Ende eine ringförmige Schulter 54. Die Schraubenfeder 28 des zweiten Bolzengelenks 50 ist zwischen dessen Gelenkbolzen 44 und der Schulter 54 eingespannt.

Der Rotor 52 hat die Form einer eingängigen Wendel oder Schnecke und arbeitet in der für Exzenterschneckenpumpen typischen Weise in einem nicht dargestellten Stator mit einer elastischen Auskleidung von der Form einer zweigängigen Hohlwendel oder -schnecke. Zwischen dem Stator und dem Rotor 52 ist ein in Fig. 1 angedeutetes Zwischengehäuse 56 angeordnet, das einen Anschlußstutzen 58 aufweist. Der Anschlußstutzen 58 ist je nach Drehrichtung des Rotors 52 Einlaß- oder Auslaßstutzen. Stator, Zwischengehäuse 56 und Lagergehäuse 10 sind in üblicher Weise zerlegbar zusammengespannt.

## Patentansprüche

1. Bolzengelenk für Exzenterschneckenpumpen mit
   - einem äußeren Gelenkkopf (34), der einen mindestens in einer axialen Richtung offenen Hohlraum (36) sowie eine diametrale Bohrung (38) aufweist,
   - einem inneren Gelenkkopf (40), der in dem Hohlraum (36) angeordnet ist und ebenfalls eine diametrale Bohrung (42) aufweist,
   - einem Gelenkbolzen (44), der sich durch die beiden diametralen Bohrungen (38, 42) erstreckt und
   - einer Bolzensicherung, die den Gelenkbolzen (44) am äußeren Gelenkkopf (34) festhält,

   dadurch **gekennzeichnet**, daß
   - der Gelenkbolzen (44) zwei aus dem äußeren Gelenkkopf (34) radial herausragende Enden (46) mit je einer quer zur Längsrichtung des Gelenkbolzens (44) verlaufenden Einkerbung (48) aufweist und
   - die Bolzensicherung von einer Schraubenfeder (28) gebildet ist, die sich mit einem Ende in den beiden Einkerbungen (48) des Gelenkbolzens (44) und mit ihrem anderen Ende an einer Schulter (24; 54) abstützt, welche in bezug zum äußeren Gelenkkopf (34) axial unverschiebbar ist.

2. Bolzengelenk nach Anspruch 1,
   dadurch **gekennzeichnet**, daß die Schulter (24) an einer Gleitringdichtung (14) ausgebildet ist, die den äußeren Gelenkkopf (34) gegen ein Gehäuseteil (10) abdichtet.

3. Bolzengelenk nach Anspruch 1 oder 2,
   dadurch **gekennzeichnet**, daß die Einkerbungen (48) Ringnuten von annähernd halbkreisförmigem Querschnitt sind.

## Claims

1. A pin joint for eccentric worm pumps, comprising
   - an outer joint head (34) including a cavity (36) which is open at least in one axial direction as well as a diametral bore (38),
   - an inner joint head (40) disposed in the cavity (36) and likewise including a diametral bore (42),
   - a pin (44) extending through both diametral bores (38,42), and
   - pin retaining means to lock the pin (44) at the outer joint head (34),

   **characterized** in that
   - the pin (44) has two ends (46) projecting radially out of the outer joint head (34) and each formed with a notch (48) transversely of the longitudinal direction of the pin (44), and
   - the pin retaining means is embodied by a helical spring (28) supported at its one end in the two notches (48) formed in the pin (44) and at its other end on a shoulder (24; 54) which is not displaceable in axial direction with respect to the outer joint head (34).

2. The pin joint as claimed in claim 1, characterized in that the shoulder (24) is formed at a sliding ring seal (14) which seals the outer joint head (34) with respect to a housing member (10).

3. The pin joint as claimed in claim 1 or 2, characterized in that the notches (48) are annular grooves having an approximately semicircular cross section.

## Revendications

1. Articulation à broche pour des pompes à vis excentriques, comprenant :
   - une tête externe d'articulation (34) qui présente une cavité (36) ouverte au moins dans une direction axiale et un alésage diamétral (38),
   - une tête d'articulation interne (40) qui est agencée dans la cavité (36) et qui présente aussi un alésage diamétral (42),
   - une broche d'articulation (44) qui s'étend au travers des deux alésages diamétraux (38, 42) et
   - une sécurité de broche qui retient la broche d'articulation (44) sur la tête d'articulation externe (34),

   caractérisée en ce que :
   - la broche d'articulation (44) présente deux extrémités (46) qui font saillie radialement hors de la tête d'articulation externe (34) et qui comprennent chacune une rainure (48) s'étendant transversalement par rapport à la direction longitudinale de la broche d'articulation (44), et

- la sécurité de broche est formée par un ressort à boudin (28) qui est appuyé par une extrémité dans les deux rainures (48) de la broche d'articulation (44) et par son autre extrémité sur un épaulement (24; 54) qui ne peut pas être déplacé axialement par rapport à la tête d'articulation externe (34).

2. Articulation à broche suivant la revendication 1, caractérisée en ce que l'épaulement (24) est formé sur un joint d'étanchéité à anneau de glissement (14) qui rend étanche la tête d'articulation externe (34) par rapport à une partie de corps (10).

3. Articulation à broche suivant l'une ou l'autre des revendications 1 et 2, caractérisée en ce que les rainures (48) sont des rainures annulaires d'une section transversale approximativement semi-circulaire.

FIG.1

FIG.2